# EUROPEAN PATENT APPLICATION

(11) **EP 2 378 676 A1**
(43) Date of publication of application: **19.10.2011**
(21) Application number: 11161959.9
(22) Date of filing: 11.04.2011
(51) Int. Cl.: H04B 7/185, H04L 29/08, H04W 4/12

(54) **Systems and methods for integration of ip-based data link management in existing avionics architectures**

(30) Priority: 19.04.2010 US 762755
(71) Applicant: Honeywell International, Inc., Morristown, New Jersey 07962-2245 (US)
(72) Inventor: Toth, Louis T., 07962-2245 Morristown New Jersey (US); Olive, Michael L., 07962-2245 Morristown New Jersey (US)
(74) Representative: Buckley, Guy Julian

(57) **Abstract**

Systems and methods for integration of IP-based data link management in existing avionics architectures are provided. In one embodiment, a communications management unit comprises: a legacy router providing access to a first set of air-ground data links; an internet protocol router providing access to a second set of air-ground data links; an applications and routing policy that provides criteria for selecting of a data link from one of the first set of air-ground data links or the second set of air-ground data links; and a data link manager that selects the data link from either the first set of air-ground data links and second sets of air-ground data links based on information provided by the applications and routing policy and controls the legacy router and the internet protocol router to route communication messages via the selected data link.

## Description

### BACKGROUND

The two systems typically used for supporting communications for airline operations are the Aircraft Communications Addressing and Reporting System (ACARS) and the Aeronautical Telecommunication Network (ATN). Each of these systems utilizes legacy, aeronautical unique air-ground data links to communicate data between on-board avionics applications and ground stations. IP-based datalinks have recently been made available or are soon to be made available in systems specifically made for airline communications. Gatelink IEEE 802.11 (Wi-Fi) and Cellular are currently available and are used when the aircraft is at the gate. Airport WiMAX is becoming available and is used when the aircraft is in the vicinity of airports. Recently, airlines have started providing IP-based broadband services (BBS) that are available for passengers during flight. These broadband services are provided using IP-based air-ground data links based on technologies such as AirCell's air-to-ground cellular and Row44's broadband SATCOM. These new broadband services, usable during flight, typically offer higher data throughput than what is available from the legacy ACARS and ATN aeronautical communication systems. However, existing data communications avionics do not provide the capability for connectivity to the new IP-based air-ground data links and for dynamic selection of the available data link that is most cost effective for applications supporting airline operations.

For the reasons stated above and for other reasons stated below which will become apparent to those skilled in the art upon reading and understanding the specification, there is a need in the art for improved systems and methods for management of IP-based data links for airline communications and integration of IP-based data link management with existing management of legacy data links.

### SUMMARY

The embodiments of the present invention provide methods and systems for providing IP-based data link management and integration of IP-based data links with legacy data link management in a single communications management function and will be understood by reading and studying the following specification.

In one embodiment, a communications management unit comprises: a legacy router providing access to a first set of air-ground data links; an internet protocol router providing access to a second set of air-ground data links; an applications and routing policy that provides criteria for selecting of a data link from one of the first set of air-ground data links or the second set of air-ground data links; and a data link manager that selects the data link from either the first set of air-ground data links and second sets of air-ground data links based on information provided by the applications and routing policy and controls the legacy router and the internet protocol router to route communication messages via the selected data link.

### DRAWINGS

Embodiments of the present invention can be more easily understood and further advantages and uses thereof more readily apparent, when considered in view of the description of the preferred embodiments and the following figures in which:

Figure 1A is a block diagram of one embodiment of the present invention;

Figure 1B is a block diagram of one embodiment of the present invention of a communications management unit (CMU);

Figure 2 is a block diagram of another embodiment of the present invention; and

Figure 3 is a flowchart of one embodiment of a method of the present invention.

In accordance with common practice, the various described features are not drawn to scale but are drawn to emphasize features relevant to the present invention. Reference characters denote like elements throughout figures and text.

### DETAILED DESCRIPTION

In the following detailed description, reference is made to the accompanying drawings that form a part hereof, and in which is shown by way of specific illustrative embodiments in which the invention may be practiced. These embodiments are described in sufficient detail to enable those skilled in the art to practice the invention, and it is to be understood that other embodiments may be utilized and that logical, mechanical and electrical changes may be made without departing from the scope of the present invention. The following detailed description is, therefore, not to be taken in a limiting sense.

Embodiments of the present invention address the limitations of existing avionics architectures by providing for a communications management unit (CMU) that provides connectivity to internet protocol (IP) based broadband data links in addition to the legacy ACARS and ATN based data links. Embodiments of the present invention provide aircraft operators a flexible and scalable connectivity option that enables on-board applications in dissimilar aircraft domains to access IP-based air-ground data links available to the aircraft. The selection of which data link to use may be based on selectable criteria such as cost and required quality of service. Embodiments of the present invention further provide connectivity for applications hosted on the CMU and on other devices connected to the CMU via aircraft private networks. In one embodiment, interconnectivity of the aircraft private networks is achieved using aeronautical unique on-board data buses such as ARINC 429 or local area networks using Ethernet.

The IP data link manager selects access networks based on an applications and routing policy, broadband service availability and status, the aircraft's geographic location, and the phase of flight of the aircraft. Embodiments of the applications and routing policy include selection criteria such as cost based analysis and quality of service (QOS) parameters, including class of service (CoS), data throughput, data rate, packet delay, packet error rate, packet loss rate, and any other suitable selection criteria.

Further one or more embodiments of the present invention provide an avionics architecture that integrates both legacy data link management and management of IP-based data links into one communications management function. This provides more communication options with better throughput for air-ground communication. A routing policy is used to select which data link is best suited and most cost effective for any given application data or message. Existing avionics systems can be easily modified to support IP-based data links.

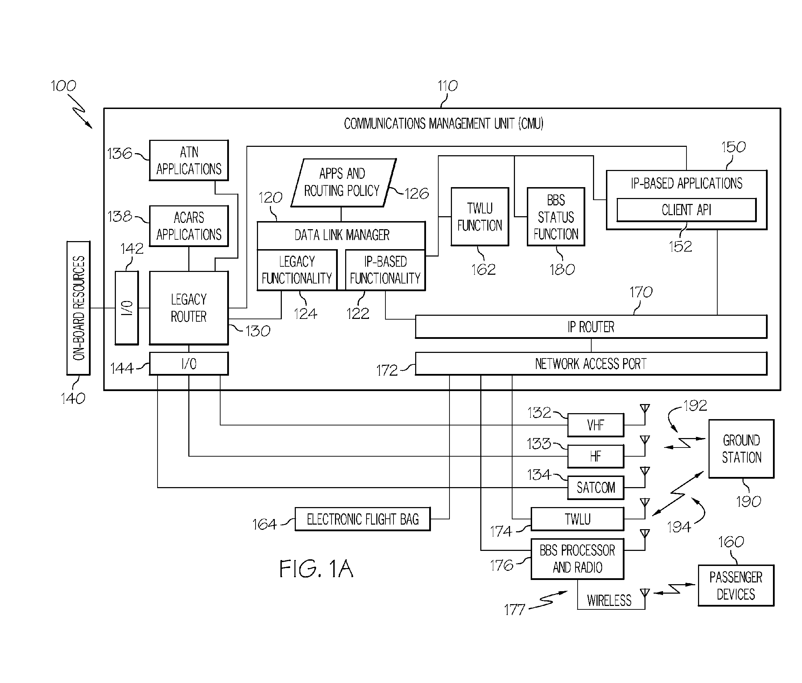

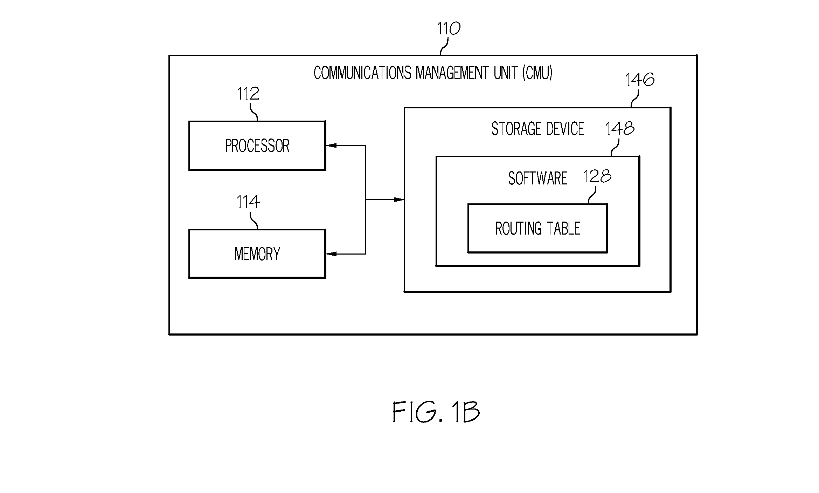

Figure 1A is a block diagram of one embodiment of an avionics system 100 that supports internet protocol (IP) based data links for on-board ACARS applications 138, ATN applications 136, and IP-based applications 150. The avionics system 100 comprises a communications management unit (CMU) 110 providing air-ground datalink connectivity for on-board resources 140. The applications 136, 138, and 150 reside on the CMU 110 in the embodiment shown in Figure 1; however additional applications (ACARS, ATN, or IP-based) reside on other avionics connected to the CMU 110. The avionics system 100 also includes VHF radio 132, HF radio 133, and SATCOM radio 134 (referred to herein collectively as legacy radios) and a terminal wireless LAN unit (TWLU) 174 and broadband service (BBS) processor and radio 176 (referred to collectively as BBS equipment). The TWLU 174 provides Gatelink 802.11 and Cellular radios dedicated to airline communications. The BBS processor and radio 176 supports a broadband air-ground service primarily for passenger communications.

Embodiments of the avionics system 100 are installed on-board aircraft. External to the avionics system 100 is a ground station 190 that provides connectivity to the aircraft via ground-based networks to ground systems, such as air traffic control, airlines operations or airline approved third-party service providers. The avionics system 100 establishes at least one air-ground communication data link (192, 194) to the ground station 190 for transmission and reception of various communications and messages between ground-based applications and on-board ACARS applications 138, ATN applications 136, and IP-based applications 150.

IP-based media for implementing IP-based data links 194 include, for example, Gatelink Wi-Fi, Gatelink Cellular, in-flight air-to-ground cellular such as AirCell, or inflight SATCOM such as Row44. Legacy aeronautical communications include ACARS or ATN. Legacy media for implementing legacy data links 192 (i.e., ACARS and ATN data links) include Very High Frequency (VHF) communications, High Frequency (HF) communications, Satellite Communications (SATCOM), or other appropriate communication technology known to one of skill in the art for communication between the ground station 190 and CMU 110.

CMU 110 comprises a data link manager 120, a legacy router 130 and an IP router 170. Legacy applications such as ATN applications 136 and ACARS applications 138 may be executed either within the CMU 110 or by other on-board resources 140. Similarly, IP-based applications 150 may be executed either within CMU 110 or by other on-board resources 140. The legacy router 130 facilitates the exchange of messages between the aircraft and a ground-based system by providing access to a first set of legacy air-ground data links 192. In one embodiment, the legacy router 130 comprises an ACARS router that routes data in the form of character-oriented ACARS messages and an ATN router that routes data in the form of bit-oriented ISO 8208 packets. The internet protocol router 170 facilitates the exchange of messages (data) between the aircraft and a ground-based system using internet protocol standards via a second set of IP-based air-ground data links 194 and routes data in the form of IP packets.

The data link manager 120 controls the legacy router 130 and the IP router 170 to route messages via a selected data link from either the legacy air-ground data links 192 or the IP-based air-ground data links 194. In other words, the data link manager 120 decides whether messages are routed to a legacy data link through the legacy router 130 or to an IP based data link through the IP router 170. The data link manager 120 makes this decision based on information supplied by applications and routing policy 126 and other factors (such as data link availability and quality of service). In this way, data link manager 120 provides components and devices of the avionics system 100 (such as ATN applications 136 and ACARS applications 138) that traditionally were only capable of utilizing one of the legacy air-ground data links 192 with access to the IP-based air-ground data links 194. The data link manager 120 also selects the most cost-effective IP-based data link for IP-based applications.

Data link manager 120 includes an IP-based functionality 122 and a legacy functionality 124. The IP-based functionality 122 selects the IP-based data link 194 based on the applications and routing policy 126 and on data link availability and quality of service. The IP-based functionality 122 receives availability and quality of service status from the TWLU function 162 and a BBS status function 180 for their respective data links 194. In one embodiment, the IP-based functionality 122 controls the establishment of the selected data link, such as the data links provided by the TWLU 174, including Gatelink Wi-Fi and Cellular. For example, when the aircraft is at an airport gate and Gatelink Wi-Fi becomes available and the IP-based functionality 122 decides that Gatelink Wi-Fi is the most cost-effective data link to use, the IP-based functionality 122 controls the TWLU 174 to establish a data link 194. However, in some embodiments, the IP-based functionality 122 does not have similar control of the BBS processor and radio 176 data links because the BBS is shared between airline and passenger communications. The IP-based functionality 122 updates the routing table in the IP router 170, thereby instructing the IP router 170 which IP-based data link 194 is selected. The IP-based functionality 122 also instructs the IP-based applications 150 to reestablish transport layer connections when the underlying data link is changed. The IP-based functionality 122 informs the legacy functionality 124 of the availability of the selected IP-based data links for use by legacy applications 136 and 138.

The legacy functionality 124 selects the data links for the ATN applications 136 and ACARS application 138 to use. The data links can be one of the legacy data links 192 or the IP-based data link 194 that the IP-based functionality 122 selected. The legacy functionality 124 selects the data link for the legacy router 130, which routes the data between the legacy applications 136 and 138 and the selected data link. The legacy functionality 124 determines whether data, such as an ACARS message, can or should be sent over a data link based on criteria in the applications and routing policy 126 and current status and availability of the legacy aero data links 192 and the selected IP-based data link 194. When the legacy functionality 124 determines that such data can be sent over the selected IP-based data link 194, the legacy router 130 forwards the data to an IP-based application function that interfaces to the IP-based network service.

The application and routing policy 126 includes predetermined criteria for selecting a broadband media to establish an IP-based data link 194, such as airline preferences, application requirements and regulatory restrictions. Examples of application requirements and regulatory restrictions include requirements on data bandwidth, prioritization, and security requirements. Examples of preferences regarding what data link to connect to include cost, geographic region and location, phase of flight, timeliness of delivery, urgency, availability of data links per geographic region, availability of data links per phase of flight, quality of service (QOS) parameters, regulatory and airline restrictions on use of particular data links for transmitting particular messages, or any other suitable criteria. Cost based criteria cost can include criteria relating service agreement licenses between the airline, a broadband service provider, and IP-based data link 194 service providers.

One embodiment of the routing policy 126 is static and is pre-loaded into the avionics system 100. In some embodiments, data link manager 120 selects a data link based on which data link among available data links (192, 194) best meets the selection criteria given in the routing policy 126. The routing policy 126 can also assign a priority level to data based on whether the data should be sent earlier in a queue or if it could be sent later. In one embodiment, the routing policy 126 is realized in software that is stored on a suitable storage medium or device.

When data link manager 120 determines that a message should be sent over a legacy aero data link 192, data link manager 120 instructs the legacy router 130 to route the message to one of the VHF, HF, or SATCOM radios, 132, 133, or 134, respectively. An input/output (I/O) interface 144 interfaces the CMU 110 to VHF radio 132, HF radio 133, and SATCOM radio 134. In one embodiment, the I/O interface 144 is an ARINC 429 bus interface. In one embodiment, when a message can be sent over an IP-based data link 194, data link manager 120 instructs the legacy router 130 to forward the message to an IP-based application function that serves as the interface to the IP router 170, which in turn provides the message to a network access port 172. The network access port 172 provides the message to broadband service equipment such as the TWLU 174 and the BBS processor and radio 176. In one embodiment, the IP router 170 also performs as a firewall to protect the avionics system 100 from the outside internet.

Because the IP-based application 150 supports IP connection, messages originating from them will, in most cases, be instructed by data link manager 120 to be routed by the IP router 170. However, if there are no IP based data links 194 available, a message from an IP-based application 150 can be routed by the legacy router 130 for transmission over a legacy aero data link 192. Handling of the messages from each IP-based application 150 is dictated by a client application programming interface (API) 152 that is integrated into each application 150 and informs its application 150 of the data link management capability of the application 150. Some applications 150 provide data link manager 120 with dynamic policy requests, such as a request for a data bandwidth allocation. The client API 152 sends the dynamic policy requests to the data link manager 150. The client API 152 also dynamically provides the data link manager 150 with an application's (such as ATN applications 136 or ACARS application 138) needs or requirements for data bandwidth. Other implementations of the IP-based application 150 are located external to the CMU 120.

CMU 110 also comprises a broadband service (BBS) status function 180. The BBS status function 180 provides the data link manager 120 with the status of the broadband services that currently are available to aid in determining which of the data links 192, 194 to connect to. The BBS status function 180 does this, for example, by indicating which data links are available at any given time. The BBS status function 180 receives status information from the BBS processor and radio 176 and provides the data link manager 120 with information regarding IP-based data link 194 availability and the quality of service being experienced. The status information includes, but is not limited to, information relating to class of service, data throughput, data rate, packet delay, packet error rate, and packet loss rate. An interface, such as a Simple Network Management Protocol (SNMP) interface from the standard Internet Protocol suite, connects the broadband status function 180 and the BBS processor and radio 176 to obtain the IP-based data link 194 status information.

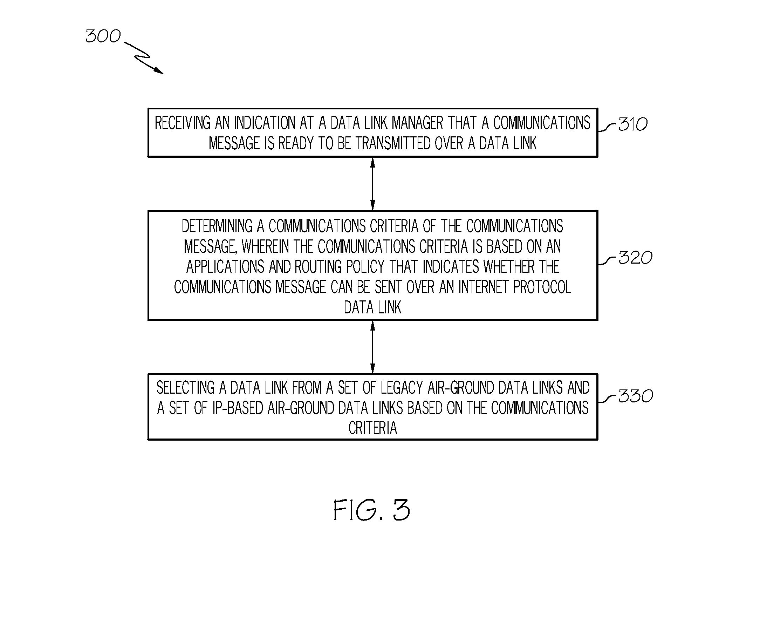

As illustrated in Figure 1B, in one embodiment, CMU 110 comprises at least one processor 112 and at least one memory 114 in communication with the processor 112. In one embodiment, software 148 includes executable code for realizing one or more CMU 110 components such as data link manager 120 and the applications and routing policy 126. In one embodiment, software 148 is stored in a suitable storage device or medium 146. The physical storage medium 146 on or in which the program instructions are embodied is also referred to here as a "program product". Software 148 when executed by the processor 112, will cause CMU 110 (and more generally the aircraft in which CMU 110 is deployed) to carry out various functions described here as being performed by CMU 110 (for example, at least a portion of the processing described below in connection with Figure 3). Embodiments of the software 148 further comprise any additional software application required to perform the functions described herein.

Further illustrated in Figure 1B is a routing table 128 used in conjunction with IP router 170 to select an access network. The routing table 128 (also referred to herein as the IP routing table) also comprises network configuration data. During operation, the routing table 128 is updated based on IP-based data link 194 selections made by the data link manager 120. Exemplary entries in the routing table 128 include a destination network address, a destination network mask, a gateway address, and a CMU Ethernet interface.

The data link manager 120 instructs the internet protocol router 170 to use the selected data link by updating the routing table 128 with the updated routing information to access the selected data link. Embodiments of the updated information include an updated gateway IP address and updated CMU Ethernet interface for each destination IP address entry in the routing table 128 that should be reached via the selected data link. In one embodiment, the IP router 170 obtains its IP address in the air-ground network domain from the BSS processor and radio 176, such as through a Domain Host Configuration Protocol (DHCP) service, and which is provided by the BSS processor and radio 176. The DHCP services in the BBS processor and radio 176 provides the CMU 110 with network configuration data for the CMU 110 to connect to the BBS network. DHCP is a standard internet protocol application that is a client/server type interface and is part of the Internet Protocol suite. The datalink manager 120 informs the IP-based application layer function to establish or reestablish an end-to-end connection with the ground peer application when the routing table 128 is updated.

In one embodiment, avionics system 100 further establishes an IP-based aircraft private network (for example, a local area network (LAN)) that provides interconnectivity between any on-board IP-capable devices such as an electronic flight bag (EFB) 164. In one embodiment, the EFB 164 is an IP-capable device and is connected to the CMU 110 via a LAN using Ethernet interfaces. Those on-board IP-capable devices access the IP router 170 through CMU 110 to use the BBS processor and radio 176 to communicate with ground based systems. The CMU 110 also provides an on-board interconnection capability by interfacing the devices on the LAN with devices connected to the CMU 110 via ARINC 429 data buses. Thus, for example, the EFB 164, connected on the LAN, can utilize a cockpit printer connected to the CMU 110 via an ARINC 429 interface. Those on-board resources 140 that only access legacy services access the legacy router 130 through the CMU 110.

In one embodiment, TWLU function 162 provides the data link manager 120 with the capability to control and determine the status of Gatelink Wi-Fi and Gatelink Cellular radios in the TWLU 174. If the IP-based functionality 122 selects Gatelink Wi-Fi or Gatelink Cellular based on the applications and routing policy 126 (in addition to knowledge of the availability of Gatelink at an airport) and phase-of-flight (that is, the aircraft is at the gate), the IP-based functionality 122 instructs the TWLU function 162 to enable the selected TWLU radio 174 to operate. Gatelink is available when the aircraft is at a gate and within RF coverage of ground-based radios. The TWLU 174 returns status of the Gatelink data link 194 to the TWLU function 162, which provides the status to the IP-based functionality 122.

CMU 110 acts as a network (such as Ethernet) switch for devices connected on the aircraft private LAN. In one embodiment, configuration data for the aircraft private LAN is stored statically. In another embodiment, CMU 110 acts as a dynamic host control protocol (DHCP) server. The DHCP service in the CMU 110 provides other devices on the private LAN with their network configuration data through DHCP exchanges. Through the aircraft private network, these devices achieve network access to communicate with each other, access resources internal to CMU 110, access to the air-ground IP-based data links, or access via CMU 110 to devices on busses (such as, for example, ARINC 429 busses). In one embodiment, a firewall is set up to protect the avionics system 100 from the outside internet and/or from passenger devices 160.

Legacy devices and applications, such as ACARS applications 138 and ATN applications 136, can be retrofitted to add IP-based data link management, and update the applications and routing policy 126 to support use of IP-based networks and interface functions that allow those devices and applications to utilize IP-based data links 194. In one embodiment, retrofitting is achieved through software upgrades to existing data communications software in existing data communications host platforms of the avionics system 100.

One example of retrofitting entails connecting CMU 110 to the BSS processor and radio 176 (for example, through an Ethernet port) and upgrading CMU 110 software 148. The update to the software 148 adds the BBS status function 180 to obtain status of the BBS data links 194 from the BSS processor and radio 176 and to provide the status to the IP-based functionality 122. The update to the software 148 adds the IP functionality 122 to the data link manager 120 that is integrated with the legacy functionality 124. New application functions are added that interface the existing ACARS and ATN applications 138 and 136, respectively, via the legacy router 130, to the IP-based services. The TWLU function 162 is modified to interface to the IP-based functionality 122 to accept control from and provide status to the IP-based functionality 122. The IP-based functionality 122 comprises an interface to the IP router 170 to update the routing table as necessary based on decisions made by the IP-based functionality 122 about what broadband service to use. The application and routing policy 126 is updated with cost-based and quality of service policy on using IP-based datalinks. In addition, the legacy ACARS and ATN policy is updated to include policy on use of IP-based datalinks.

In one embodiment, CMU 110 further comprises a simple network management protocol (SNMP), secured socket layer/transport layer security (SSL/TLS), and a TCP/IP communications stack including a TCP/UDP stack. The SSL/TLS is a standard library of security functions that adds security over the path between the aircraft and the ground. The SNMP is an application layer that aids in network management and interfaces CMU 110 to BSS processor and radio 176 or TWLU 174. The SNMP receives status information relating to the active data link from the radios and facilitates control of the TWLU 174.

In one embodiment, the architecture described in Figure 1A is a federated architecture. That is, CMU 110 is a line replaceable unit (LRU) with external interfaces that are standard avionics and Ethernet interfaces. Example embodiments of a federated CMU 110 include a Mark 2+ CMU and a Mark 3G CMU, both available from Honeywell International, Inc. In other embodiments, the CMU 110 already existing in an avionics system can be updated with a firmware update to provide the functionality discussed herein, especially if CMU 110 already contains at least one network access port 172 (for example, an Ethernet port). If CMU 110 does not have a network access port 172, an I/O card could be added to CMU 110 that includes at least one network access port 172. Also, the aircraft private network or LAN can be scaled or extended by adding external hubs or switches to different devices in the avionics system 100.

Other embodiments of the avionics system 100 have an integrated architecture. In these embodiments, data link manager 120 is hosted on a processor module in an integrated modular architecture with interfaces to other functions on other processor modules through a backplane, or with interfaces to other functions in other LRUs through standard avionics and Ethernet interfaces. Embodiments of the integrated avionics architectures can also be retrofitted to provide the IP-based data link 194 functionality.

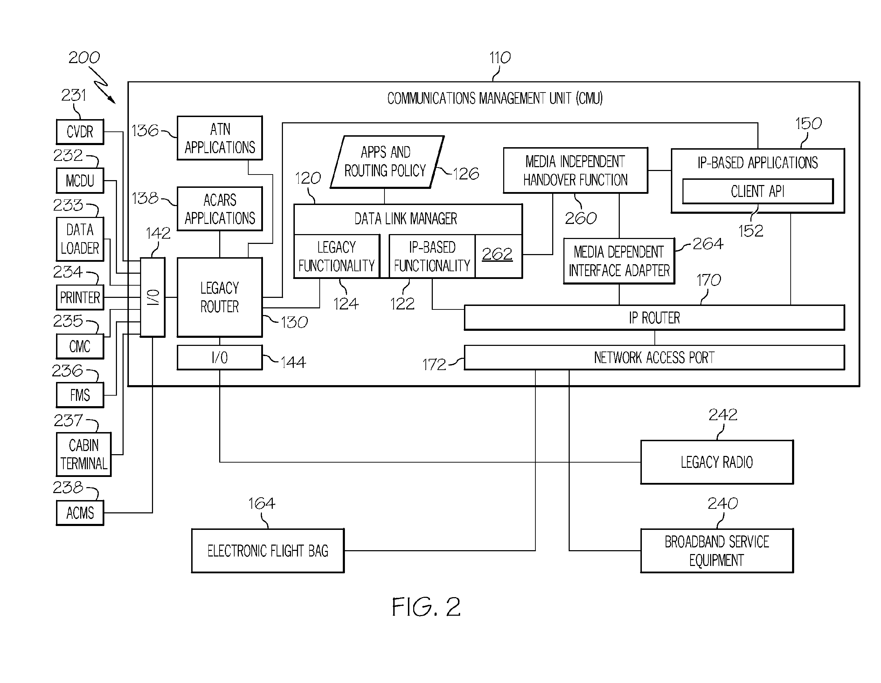

Figure 2 is a block diagram of another embodiment of an avionics system 200 that supports legacy data links 192 and IP-based data links 194. In this embodiment, CMU 110 further includes a media independent handover function (MIHF) 260, such as an IEEE 802.21 standard MIHF. Legacy Radio 242 would include at least one radio such as the VHF, HF, or SATCOM radios, 132, 133, or 134. Broadband service equipment 240 would include equipment such as TWLU 174 and BSS processor and radio 176, for example.

MIHF 260 supports seamless or soft handovers (also referred to as make-before-break handovers) between different data links through interfaces to data link manager 120 and interfaces to the data links 192 and 194. Data link manager 120 includes a media-independent interface 262 used to connect to MIHF 260. A media-dependent interface adapter 264 is provided for each data link as the interface between the data link and MIHF 260. MIHF 260 provides standardized event, command and information services for the IP-based functionality 122 to facilitate handovers between media. The IP-based functionality 122 uses these services to make the decisions on what IP-based data link to use and to initiate seamless handover from one data link to another. The media-dependent interface adapter 264 provides the media specific interface between the MIHF 260 and the datalink layer of the media. There is a unique media-dependent interface adapter 264 for each data link. In one embodiment, the BBS status function 180 and the TWLU function 162 are implemented as media-dependent interface adapters 264 for their respective data links. The event service provides the IP-based functionality 122 with link status such as link up or down, or link going down, and the like. The command service provides control of the data link, such as link power up or down, connection establishment, disconnection, and the like.

MIHF 260 also provides the information service for the IP-based functionality 122 to provide information about networks that can be accessed via the data links. MIHF 260 obtains this information from remote information databases in fixed, ground networks via a network connection over an active IP-based data link 194 (as used herein, active refers to a data link that is currently being accessed). Also, in one embodiment, MIHF 260 provides pre-configured geographic information stored in the application and routing policy 126. Using the information available from MIHF 260, data link manager 120 dynamically select data links based on what data links are available in other geographical regions by querying the ground database regarding what media is available for a given geographical region. This functionality frees the avionics system 200 from having to store the geographic information statically and preconfigured. For example, if the aircraft is transitioning from region A to B, the data link manager 120 can query what media is available in region B so it can make an intelligent decision of what data link to access in region B. Another embodiment of the avionics system 200 stores a database on-board which contains the geographic BBS information.

The MIHF 260 is configured to receive status information from the on-board broadband service equipment 240 as well as information from ground-based information services about other possible available data links. The MIHF provides this information to the data link manager 120. The MIHF 260 facilitates the data link manager 120 in the initiation of handovers from an active data link to a target data link (for example, the next desired data link to use) by facilitating the commands to the BBS equipment 240 to establish or terminate a data link connections as needed, if the broadband, IP-based data link 194 allows such control. An interface, such as the Simple Network Management Protocol (SNMP) from the standard Internet Protocol suite, connects the MIHF 260 and the BBS equipment 240 to obtain the IP-based data link 194 status information and to control the BBS equipment 240 when allowed. In this way, using the standard network management capability of SNMP in the BBS equipment 240 provides the media-dependent interface functionality in the BBS equipment 240 without having to modify the BBS data link layer. For the case in which a BBS is providing communications services for airline operations and passengers, the data link manager 120 would not control the BBS data link, but does receive status from the BBS data link. The data link manager 120 initiates the media handover for the airline applications without sending any control to the BBS equipment 240. When the data link is with TWLU, the data link manager 120 controls the TWLU data links as explained above.

Alternate embodiments of avionics systems that do not include a MIHF 260 (such as avionics system 100, for example) employ hard handovers (that is, break-before-make handovers). In those embodiments, CMU 110 comprises media-dependent interfaces to connect data link manager 120 with the various equipment for the data links. These media-dependent interfaces provide basic link status and control information directly to data link manager 120. The BBS status function 180 and the TWLU function 162 are implemented as media-dependent interface adapters 264 for their respective datalinks. Embodiments without an MIHF 260 have reduced complexity and implementation costs, but sacrifice performance capabilities by using hard handover.

The avionics system 200 also comprises on-board resources that can utilize IP functionality including a cockpit voice data recorder (CVDR) 231, a multifunction control and display unit (MCDU) 232, a data loader 233, a printer 234, a central maintenance computer (CMC) 235, a flight management system (FMS) 236, a cabin terminal 237 and an aircraft conditioning monitoring system (ACMS) 238. For example, a FMS 236 can use the IP network to update the aircraft's flight path (taking into consideration factors such as timeliness and security, or civil aviation authority approval). The ACMS 238, which collects and formats information relating to the status of flight parameters, downloads the information to the ground through a broadband data link. The CVDR 231 could send real time recorder information to the ground, either in lieu of or in parallel with what is already recorded in an aircraft's black box. Furthermore, an EFB 164 could access the BBS equipment 240 through CMU 110 as well as accessing other on-board devices through the aircraft private network, which can streamline critical avionics and flight applications.

Figure 3 is a flowchart of one embodiment of a method 300 of selecting a data link for a communications message. In one embodiment, the method 300 selects an IP-based data link for legacy ATN applications 136, legacy ACARS applications 138, and IP-based applications 150. As used herein, communications message refers to any data or form of data. The method 300 begins at 310 with receiving an indication at a data link manager that a communications message is ready to be transmitted over a data link. Alternatively, the method 300 determines at the data link manager what applications require communications via an air-ground data link.

When a message is received at 310, the method proceeds to 320 with determining a communications criteria of the communications message. The communications criteria are based on an applications and routing policy that indicates whether the communications message can be sent over an internet protocol data link. For example, in one embodiment, the selection criteria comprises criteria relating to legacy data links and IP-based data links. For any given message that can be sent over broadband, the message itself and the application that generated it will have criteria relating to its transmission in the routing policy. The criteria may include QOS requirements, cost, timeliness requirements, and the like. The cost of service and QOS offered by the available data links can be compared to the cost acceptable to the airline and the QOS requirements of the message or application data. Threshold levels for the various criteria can be predetermined and the selection of the data link is based upon whether the given criteria specified for that data link falls above or below the threshold level. In one embodiment, determining a communications criteria includes weighing the various criteria with predetermined weighing factors.

The method continues at 330 with selecting a data link from a set of legacy air-ground data links and a set of IP-based air-ground data links 194 based on the communications criteria. In one embodiment, selecting a data link at 330 further includes monitoring the availability of one or more data links. For example, in one embodiment, CMU 110 monitors the availability of data links through receiving status updates from MIHF 260 and the BBS status function 280 regarding which data links are available and their corresponding quality of service (QOS). The QOS criteria of the applications can be compared in real-time to the QOS actually being experienced over the datalink in making the datalink selection. QOS thresholds can be predetermined and used in the selection. The aircraft's geographic location and phase of flight can be determining factors regarding what data links are available. For example, Gatelink is only available when the aircraft is at the airport gate. As another example, BBS may only be available above a specific flight altitude or available only in specific geographical regions. Additionally, a less expensive BBS may only be available in specific regions.

One embodiment of selecting a data link at 330 further includes selecting an active data link from the one or more available data links based on the routing policy. Any data link that satisfies the cost or the QOS criteria of the message may be used to send the message to ground. In one embodiment of the method 300, the data link with the best QOS is selected. In another embodiment, the cheapest data link is selected. Other embodiments select a data link based on other factors contemplated herein. This decision is made for each application or may be based on a message by message basis, or may be determined for the application as a whole. For example, a cost-based selection determination comprises determining a relative cost index for the given application and IP media and selecting a data link based on a comparison of the two cost indices.

Once an active data link is selected, a connection via the active data link is established. In the case of using Gatelink, the TWLU is controlled to first establish the data link and then establish a connection via the data link. Other embodiments of the method 300 comprise sending a message over the active data link and receiving other messages from ground. Messages can be assigned a priority to determine where in a queue it can be sent, or whether the message can wait for a more suitable data link to become available (for example, a cheaper data link).

If the active data link becomes unavailable or undesirable (for example, the aircraft changes geographic location and the selected access network is out of range, the QOS is below a predetermined threshold, or a cheaper service becomes available), embodiments of the method 300 also comprise establishing a connection with a target or destination data link. The target data link is a next data link that is more suitable for connection than the previous active data link. For example, the data link manager 150 discovers that a destination network associated with an application may be reachable through an access network that is newly available or has better QOS. The routing table can be updated based on IP-based data link 194 selections made by data link manager 120. The gateway address and CMU Ethernet interface are changed to allow connection to the destination network address. The destination network can be found via the gateway to the destination network. Based on the routing policy 126, the routing changes and the next data link can become the new active data link. When the routing changes, the affected aircraft application reestablishes the connection with the ground peer application over the new datalink. The data link manager notifies applications of data link changes when they occur.

In one embodiment selecting a data link includes determining the imminent availability or loss of availability of a data link. This determination is used by the data link manager in selecting a data link. Determining the imminent availability or loss of availability is achieved by knowing the geographical position and phase of flight of the aircraft and comparing this with a priori information on data link availability per geographic region and during phases of flight of the aircraft. The imminent availability or loss of availability of a data link may also be determined from information obtained by the MIHF 260 from a ground-based information server.

In another embodiment, selecting a data link further comprises determining the source of the message, wherein the source indicates if the message can be sent over an internet protocol data link. The method 300 determines whether the source is a legacy application or an internet protocol based application. For example, some message originating from a legacy source such as an ATN or ACARS application may support being transmitted over an IP based media and some may not (for example, based on policy). If the ATN or ACARS application supports IP communications, then the message may be sent to ground over an IP-based data link. If the source is an IP-based application, then the communication message can be sent to ground over an IP-based data link.

Several means are available to implement the systems and methods of the current invention as discussed in this specification. These means include, but are not limited to, digital computer systems, microprocessors, general purpose computers, programmable controllers and field programmable gate arrays (FPGAs). For example, in one embodiment, data link manager 120 is implemented by an FPGA or an ASIC, or an embedded processor. Therefore other embodiments of the present invention are program instructions resident on computer readable media which when implemented by such means enable them to implement embodiments of the present invention. Computer readable media for storage media 146 includes any form of a physical computer memory device. Examples of such a physical computer memory device include, but is not limited to, punch cards, magnetic disks or tapes, optical data storage system, flash read only memory (ROM), non-volatile ROM, programmable ROM (PROM), erasable-programmable ROM (E-PROM), random access memory (RAM), or any other form of permanent, semi-permanent, or temporary memory storage system or device. Program instructions include, but are not limited to computer-executable instructions executed by computer system processors and hardware description languages such as Very High Speed Integrated Circuit (VHSIC) Hardware Description Language (VHDL). Combinations of the above are also included within the scope of computer readable media.

A number of embodiments of the invention defined by the following claims have been described. Nevertheless, it will be understood that various modifications to the described embodiments may be made without departing from the spirit and scope of the claimed invention. Features and aspects of particular embodiments described herein can be combined with or replace features and aspects of other embodiments. Accordingly, other embodiments are within the scope of the following claims.

## Claims

1. A communications management unit (110), comprising:
a legacy router (130) providing access to a first set of air-ground data links (192);
an internet protocol router (170) providing access to a second set of air-ground data links (194);
an applications and routing policy (126) that provides criteria for selecting of a data link from one of the first set of air-ground data links (192) or the second set of air-ground data links (194); and
a data link manager (120) that selects the data link from either the first set of air-ground data links (192) and second sets of air-ground data links (194) based on information provided by the applications and routing policy (126) and controls the legacy router (130) and the internet protocol router (170) to route communication messages via the selected data link.

2. The communications management unit (110) of claim 1, wherein the data link manager (120) selects the selected data link from the second set of air-ground data links (194) when the applications and routing policy (126) indicates that a communication message can be sent over an internet protocol data link;
wherein the communication message comprises one of an aeronautical telecommunication network (ATN) application (136) message or an aircraft communications addressing and reporting system (ACARS) application (138) message.

3. The communications management unit (110) of claim 1, further comprising a broadband status function (180) configured to provide the data link manager (120) with information regarding data link availability.

4. The communications management unit (110) of claim 1, further comprising:
a media independent handover function (260) coupled to the data link manager (120), wherein the media independent handover function (260) instructs the data link manager (120) to facilitate selecting and switching data links for messages for a first application from an active data link to a target data link; and
a media dependent interface adapter (264) that interfaces the media independent handover function (260) and broadband service equipment.

5. The communications management unit (110) of claim 1, wherein the data link manager (120) selects data links further based on at least one of broadband service availability, broadband status, availability of data links per geographic region, availability of data links per phase of flight, or a regulatory restriction, wherein the data link manager (120) informs the legacy router (130) of the availability of the selected data link.

6. A method for selecting a data link for a communications message, comprising:
receiving an indication at a data link manager (120) that the communications message is ready to be transmitted;
determining a communications criteria of the communications message,
wherein the communications criteria is based on an applications and routing policy (126) that indicates whether the communications message can be sent over an internet protocol data link; and
selecting a data link from a set of legacy air-ground data links (192) and a set of internet protocol based air-ground data links (194) based on the communications criteria.

7. The method of claim 6, wherein selecting a data link further comprises:
selecting a legacy air-ground data link (192) when the applications and routing policy (126) indicates that the communications message cannot be sent over the internet protocol data link (194); and
selecting an internet protocol data link (194) that satisfies the communication criteria when the applications and routing policy (126) indicates that the communications message can be sent over the internet protocol data link (194) .

8. The method of claim 6, further comprising:
monitoring availability of the set of legacy air-ground data links (192) and the set of IP-based air-ground data links (194);
selecting an active data link from one of the set of legacy air-ground data links (192) and the set of IP-based air-ground data links (194) that are available based on the routing policy; and
establishing a connection with the active data link.

9. The method of claim 6, further comprising:
comparing the communications criteria to a quality of service being experienced by an active data link;
sending the message over the active data link when the active data link meets the communications criteria; and
ending the active data link and establishing a second data link when the active data link does not meet the communications criteria, and when the second data link does meet the communications criteria.

10. The method of claim 6, wherein the applications and routing policy (126) comprises data link selection criteria comprising cost based analysis parameters and quality of service parameters;
wherein the quality of service parameters includes predetermined threshold levels of class of service, data throughput, data rate, packet delay, packet error rate, and packet loss rate.
